# NOUVEAU FASCICULE DE BREVET EUROPEEN

(11) **EP 2 834 972 B2**
(45) Date de publication et mention de la décision concernant l'opposition: **14.12.2022**
(45) Mention de la délivrance du brevet: 13.11.2019
(21) Numéro de dépôt: 13720453.3
(22) Date de dépôt: 05.04.2013
(51) Int. Cl.: H04N 7/18, H04N 21/2187, H04N 21/2343, G11B 27/036, H04N 21/854

(54) **NAVIGATION VIDEO MULTI-SOURCES**
NAVIGATION MIT MEHREREN VIDEO QUELLEN
MULTI-SOURCE VIDEO NAVIGATION

(30) Priorité: 05.04.2012 FR 1201018
(43) Date de publication de la demande: 11.02.2015
(73) Titulaire: Current Productions, 75010 Paris (FR)
(72) Inventeur: ZAJAC, Cyril, 75010 Paris (FR)
(74) Mandataire: Fédit-Loriot
(86) Numéro de dépôt international: PCT/FR2013/050751
(87) Numéro de publication internationale: WO 2013/150250

(56) Documents cités:
- US-A1- 2002 049 979
- US-A1- 2010 157 016
- US-A1- 2010 235 857

## Description

L'invention concerne la navigation vidéo multi-sources, et notamment la navigation vidéo multi-angles (« multi-angle switching » en anglais).

Typiquement, une pluralité de caméras peuvent être placées à des positions différentes autour d'une même scène, de façon à capter plusieurs vues de cette scène, par exemple une vue de face, un plan américain d'un des protagonistes et une vue de coté.

L'utilisateur final a la possibilité de choisir quelle séquence d'images, parmi les différentes séquences vidéo issues des différentes sources respectives, il souhaite visualiser, et de changer de séquence au cours de la visualisation.

Il existe des procédés permettant de naviguer sur plusieurs sources vidéos. Par exemple, le document US 2011/0090347 décrit un procédé dans lequel une pluralité de séquences vidéo, chaque séquence étant issue d'une caméra respective, sont envoyées sur un réseau de type Internet. Ces flux sont reçus et affichés sur un terminal d'un utilisateur, lequel peut sélectionner un des flux, dit flux principal, pour un affichage sur une plus grande fenêtre. Néanmoins, lorsque cet utilisateur souhaite changer de flux principal, des problèmes de synchronisation peuvent survenir, ainsi que des dégradations de qualité d'image.

Il existe un besoin pour un meilleur confort utilisateur.

Il est proposé un procédé de navigation vidéo multi-sources mis en œuvre par un dispositif de navigation vidéo multi-sources, comprenant une étape de réception d'une séquence d'images, chaque image de ladite séquence comprenant une pluralité de parties d'images, les parties d'image de ladite pluralité comprenant des données d'images issues d'images synchronisées de flux vidéo respectifs, chaque flux vidéo étant issu d'une source correspondante.

Le procédé comporte en outre une étape de réception d'une valeur de paramètre de choix issu d'une interface utilisateur, cette valeur correspondant à l'un au moins desdits flux vidéo, et une étape de commande d'affichage de la au moins une partie d'image, parmi les parties d'image de cette pluralité, correspondant à la valeur de paramètre de choix reçue,
le procédé comprenant pour au moins une image reçue, une étape de commande d'affichage d'une partie d'image supplémentaire comprenant une pluralité d'ensembles de données d'images, dits icônes ou vignettes, chaque ensemble de données d'image étant issu d'un flux vidéo respectif ; et
   pour au moins une image courante de la séquence reçue :
      (a) une étape de capture d'au moins une partie d'image de cette image courante,
      (b) une étape de commande d'affichage image d'une image issue de la au moins une partie d'image capturée ;
et dans lequel les étapes (a) et (b) sont réitérées pour au moins une autre image de la, séquence reçue, de sorte cette réitération, donne l'illusion d'un affichage vidéo.
   au cours de l'étape (a), on capture au moins deux parties d'image parmi la pluralité de parties d'image de l'image courante,
   le procédé comprenant en outre
   générer la partie d'image supplémentaire à partir desdites au moins deux parties d'image capturées á l'étape (a),
   commander au cours de l'étape (b) un affichage image de ladite partie d'image supplémentaire.

Ce procédé peut ainsi permettre de passer d'une source à l'autre sans latence. Lorsque l'utilisateur décide de changer de flux principal, en sélectionnant un flux correspondant à une autre partie d'image de la pluralité de parties d'image, il n'est dérangé par aucun problème de synchronisation puisque chaque image reçue comprend des parties d'images déjà synchronisées entre elles. Il suffit au dispositif de navigation d'afficher une autre partie d'image que celle couramment visionnée par l'utilisateur.

En outre, on évite les dégradations de qualité d'image liées à l'utilisation de ressources du terminal pour effectuer le changement de flux à afficher.

Par ailleurs, cet affichage en tant qu'image peut permettre d'utiliser relativement peu de ressources de calcul. Le procédé décrit ci-dessus peut être effectué au moyen d'un seul lecteur vidéo.

En particulier un lecteur Flash^{®} est en général capable d'effectuer un affichage vidéo d'un seul flux vidéo à la fois. En utilisant de facon répétée des affichages images, on peut donner l'illusion d'un affichage vidéo supplémentaire.

Par exemple, chaque ensemble de données d'image peut être issu d'une partie d'image correspondante d'une image de la séquence reçue, par exemple l'image courante, une image précédente, suivante, ou autre. Les ensembles de données d'image de l'image supplémentaire peuvent avantageusement être synchronisés entre eux et être relatifs à l'image courante.

L'utilisateur peut ainsi visualiser, outre la partie d'image de la pluralité de parties d'image, la partie d'image supplémentaire, laquelle peut fournir des informations quant aux autres flux vidéo. Ceci peut permettre d'assister l'utilisateur, et d'offrir une interface plus conviviale.

Chaque ensemble de données d'images peut comprendre un ensemble de données d'image réduite issu par compression d'image correspondante du flux vidéo correspondant, par exemple par compression des données de la partie d'image de l'image reçue courante. L'utilisateur peut ainsi visionner des petites icônes montrant des images miniatures correspondants au(x) flux non-sélectionné(s).

On pourra relever que chaque emplacement d'icône peut correspondre à une seule source, ce qui peut aider l'utilisateur à sélectionner la source à afficher. Les sources peuvent ainsi être mieux identifiées que dans le document US 2011/0090347, ce qui peut être particulièrement avantageux pour une réalisation utilisateur.

Avantageusement, l'affichage de la partie d'image supplémentaire est commandé pour plusieurs images de la séquence reçue. L'utilisateur peut ainsi avoir la sensation de mouvement.

Avantageusement, l'affichage de la partie d'image supplémentaire est effectué de sorte que si l'utilisateur clique sur une icône de cette partie d'image supplémentaire, est reçue une valeur du paramètre de choix correspondant à la partie d'image associée à cette icône.

La navigation est ainsi relativement simple et intuitive, puisqu'il suffit à l'utilisateur de cliquer sur une icône animée pour sélectionner la source correspondant à cette icône.

Avantageusement et de façon non limitative, on peut commander l'affichage de la au moins une partie d'image correspondant à la valeur de paramètre de choix reçue et de la partie d'image supplémentaire au moyen d'un seul lecteur vidéo (ou « player » en anglais).

Alternativement, on pourrait bien entendu mettre en œuvre deux lecteurs vidéo.

Alternativement, on pourrait prévoir de s'abstenir de réitérer l'étape b), ou bien de la réitérer avec une fréquence relativement basse, de sorte que l'utilisateur aura la perception d'une image fixe, notamment s'il s'agit de la partie d'image supplémentaire. L'utilisateur pourra ainsi visionner un bandeau par exemple, composé de vignettes d'images fixes (ou peu réactualisées) correspondant chacune à un angle de vue.

Alternativement, on pourra prévoir d'utiliser un lecteur vidéo capable d'effectuer un affichage vidéo de plusieurs flux vidéo à la fois.

L'étape de capture d'une ou plusieurs partie(s) d'image peut être effectuée en traçant le fichier vidéo. En particulier, avec un lecteur Flash^{®} et Flex^{®}, on pourra utiliser les fonctions BitmapData.draw et BitmapData.copypixel pour effectuer respectivement les étapes (a) et (b).

La partie d'image supplémentaire peut être générée coté utilisateur, par exemple par un dispositif de navigation vidéo multi-sources, non couvert par les revendications.

Dans un mode de réalisation, au cours de l'étape (a), on capture au moins une, avantageusement au moins deux, partie(s) d'image parmi la pluralité de parties d'image d'une image courante de la séquence d'images reçues. Puis, on peut générer la partie d'image supplémentaire à partir de cette ou ces partie(s) d'image capturée(s), par exemple en réduisant chaque partie d'image capturée et en disposant chaque partie réduite de façon à former un bandeau, un camembert, ou autre.

Au cours de l'étape (b), on peut avantageusement commander un affichage image de la partie d'image supplémentaire.

Ainsi, la partie d'image supplémentaire est générée coté terminal utilisateur. La séquence d'image reçue peut comprendre des images avec simplement des parties d'images correspondant à des sources respectives.

Ce mode de réalisation est en outre avantageux en ce que, la génération de la partie d'image supplémentaire étant effectuée par exemple par le lecteur vidéo, il est relativement facile d'adapter cette génération d'image supplémentaire, par exemple pour ajouter une vignette issue d'une tierce séquence (correspondant à un contenu publicitaire par exemple, à une vidéo déjà montée, ou autre), créer l'illusion d'un déplacement des vignettes, ou autre. Ce mode de réalisation permet donc de conférer facilement une certaine souplesse à la génération de la partie d'image supplémentaire.

Dans un autre mode de réalisation, on peut prévoir qu'au moins certaines des images reçues comprennent la partie d'image supplémentaire. La partie d'image supplémentaire est ainsi générée par un serveur distant, et reçue telle quelle.

Au cours de l'étape (a) de capture, on peut capturer une partie d'image choisie parmi la partie d'image supplémentaire et une partie d'image de la pluralité de parties d'image de l'image courante (comprenant une partie d'image supplémentaire), et au cours de l'étape (b), on peut commander un affichage image de la partie d'image capturée.

Le traitement mis en œuvre par le lecteur est donc relativement simple.

Avantageusement, on effectue un affichage vidéo pour une des parties d'images, par exemple une des parties d'images de la pluralité de parties d'image, et un affichage image pour une autre des parties d'image, par exemple la partie d'image supplémentaire.

Pour effectuer un affichage vidéo d'une partie seulement des images de la séquence reçue, on pourra par exemple utiliser des fonctions d'affichage vidéo, d'agrandissement et de glissement/repositionnement. Dans le cas d'un lecteur Flash^{®} et Flex^{®} on pourra par exemple mettre en œuvre les fonctions video, OSMeframework, MediaContainer pour l'affichage vidéo, la fonction scale et les attributs de composant width et height pour l'agrandissement et les attributs de composant x et y pour le glissement/repositionnement.

Alternativement, on peut prévoir un affichage image pour l'une et l'autre de ces parties d'image.

Dans un mode de réalisation, on peut prévoir de mettre temporairement fin à l'affichage image, sur un nombre d'images reçues donné par exemple, ou pendant une période de temps donnée, et d'effectuer à la place un affichage vidéo par exemple d'un autre flux. Par exemple, on pourra prévoir que l'emplacement écran correspondant aux icônes, ou bien encore à au moins une icône, soit utilisé temporairement pour afficher une publicité.

Les parties d'image d'une même image de la séquence reçue peuvent former une partition de cette image, être entrelacées, ou autre.

L'invention peut trouver une application avantageuse dans le domaine de la navigation vidéo multi-angles, mais l'invention n'est en rien limitée à des images d'une même scène. On pourra par exemple prévoir des flux vidéo issus de caméras différentes et relatifs à des scènes différentes, par exemple des images montrant des festivités du nouvel an vers minuit dans plusieurs villes de France.

Les images peuvent être issues d'une captation par une caméra, être des images de synthèse, ou autre.

Les images peuvent subir certains traitements du type incrustation, étalonnage, ou autre, ou non.

Les images de la séquence d'images reçue peuvent comprendre des données de son, correspondant par exemple à une piste audio. On peut prévoir une seule piste audio par image, ou bien une pluralité de pistes audio.

Dans ce dernier cas, on pourra prévoir une piste audio (ou ensemble de données de son) pour chaque partie d'image de la pluralité de parties d'image. Lorsque l'utilisateur sélectionne une source, les parties d'images (sur plusieurs images reçues) correspondant à cette source sont affichées et l'ensemble de données de son (sur plusieurs images reçues) est joué.

Avantageusement et de façon non limitative, on peut prévoir en outre une étape de mémorisation des valeurs du paramètre de choix reçues de l'interface utilisateur, de façon à associer à chaque valeur de paramètre de choix une valeur de date de saisie, par exemple une durée de temps écoulé depuis le début du visionnage, des données d'horloge, un numéro d'image, ou autre. Cette mémorisation peut ainsi permettre de donner à l'utilisateur la perception que la vidéo qu'il a réalisée peut être rejouée.

Avantageusement et de façon non limitative, on peut prévoir en outre une étape de transmission de ces données mémorisées vers un serveur. Ceci peut permettre d'établir des statistiques quant aux différents choix de montage des utilisateurs, de réaliser une vidéo collaborative, et/ou autre.

Avantageusement et de façon non limitative, le procédé peut comprendre en outre :
- recevoir d'un serveur distant au moins une valeur de paramètre de choix et au moins une valeur de date correspondant à ladite au moins une valeur de paramètre de choix, et
- élaborer, en fonction desdites valeurs de paramètre de choix et de date, des données de commande destinées à l'interface utilisateur afin de signaler à l'utilisateur au moins un flux vidéo correspondant audites valeurs reçues.

Par définition, on appelle données de réalisation un ensemble de valeurs de paramètre de choix et de valeurs de date associées pour une vidéo. Ces données de réalisation peuvent être issues d'une saisie d'un ou plusieurs utilisateur(s).

Les valeurs de paramètre de choix et de date peuvent par exemple avoir été obtenues à partir de données de réalisation saisies par un ensemble d'utilisateurs. Dit autrement, la valeur de paramètre de choix reçue du serveur est obtenue à partir d'une pluralité de valeurs de paramètres de choix issues d'une pluralité de terminaux respectifs et correspondant à la valeur de date. Alternativement, ces valeurs peuvent être le fait d'une seule personne, par exemple un réalisateur reconnu.

L'invention n'est en rien limitée par la nature des données de commande.

Par exemple, les données de commande peuvent comprendre un message requérant l'affichage d'un cadre de couleur autour de la vignette correspondant au flux correspondant à la valeur de paramètre de choix reçue. L'utilisateur peut par exemple cliquer sur un onglet intitulé « réalisation communautaire » ou autre, visualiser un cadre rouge autour de la vignette correspondant au flux le plus choisi par un ensemble d'internautes, et éventuellement visualiser cette vidéo en tant que vidéo principale (affichage de la partie d'image correspondante). Au fur et à mesure du déroulement, l'utilisateur peut voir le cadre rouge se déplacer d'une vignette à l'autre, selon les données de réalisation communautaires reçues.

Les données de commande peuvent ainsi permettre de mettre en œuvre un élément de signalement, par exemple un cadre rouge, une flèche, un affichage en noir et blanc des autres vignettes, un floutage des autres vignettes, ou autre.

L'invention n'est en rien limitée à un signalement visuel. Par exemple, le flux correspondant à une valeur de paramètre de choix courant peut être signalé au moyen d'un signal sonore.

L'invention n'est pas non plus limitée à la mise en œuvre d'un élément de signalement visuel et/ou sonore. On pourrait par exemple prévoir d'afficher une vignette supplémentaire correspondant au flux couramment élu par le ou les utilisateurs distants.

Ainsi, la partie d'image supplémentaire peut être générée à partir des valeurs de paramètres de choix et de valeurs de date correspondant audites valeurs de paramètre de choix reçues d'un serveur distant.

Cette génération peut être effectuée par un serveur distant, de sorte qu'au moins certaines des images reçues comprennent une partie d'image supplémentaire avec par exemple une icône correspondant à une vidéo déjà montée.

Alternativement, cette génération peut être effectuée par un terminal, à partir des parties d'images correspondant aux sources respectives et à partir de valeurs de paramètres de choix et des valeurs de dates associées.

Par exemple, un utilisateur peut se voir proposer la possibilité de visualisation d'une vidéo déjà montée par un autre utilisateur, par exemple un réalisateur célèbre ou bien encore un anonyme ayant gagné un concours. Cette proposition peut être issue du lecteur vidéo. Suite à une saisie via l'interface utilisateur, le dispositif de navigation reçoit des données de sélection de réalisateur et envoie un message vers un serveur afin de commander la génération d'une séquence d'images incluant des données d'images de vidéo montée par le réalisateur correspondant à ces données de sélection, ou bien afin de commander la transmission d'une autre séquence vidéo avec les images de cette vidéo déjà montée. On peut alternativement prévoir que le serveur se contente de transmettre les données de réalisation correspondant à ce réalisateur, au fur et à mesure ou bien en un seul envoi, et que le lecteur vidéo, à partir de la séquence reçue et des données de réalisation reçues, affiche régulièrement, dans une des vignettes du bandeau, la partie d'image réduite correspondant à la donnée de choix de cet instant, de façon à donner l'illusion de jouer la vidéo réalisée sur cette vignette.

Dans un mode de réalisation, les données de réalisation peuvent être déterminées à partir des données de réalisation correspondant à un panel d'utilisateurs, obtenues par des calculs statistiques à partir d'un panel d'ensembles de données de réalisation. Un utilisateur peut ainsi se voir proposer la possibilité de visualisation d'une vidéo réalisée collectivement. En cas d'acceptation, le lecteur commande l'affichage à la volée des parties d'image correspondant aux données de réalisation communautaires, de façon à donner l'illusion que cette vidéo est jouée.

La partie d'image supplémentaire peut ainsi être générée à partir de la pluralité de parties d'image et à partir des données de réalisation. Cette génération peut être effectuée dans un serveur distant, mais avantageusement, on préfèrera une génération par un lecteur vidéo.

Par exemple, l'écran du terminal peut afficher un bandeau avec six icônes, dont cinq correspondent chacune à un flux vidéo issu d'une source associée, et la sixième correspond à une vidéo elle-même obtenue par montage des cinq autres flux.

On peut prévoir que la pluralité de parties d'image comprenne une partie d'image correspondant à cette vidéo déjà montée, auquel cas, en cas de clic sur la sixième icône, le lecteur se contente d'un affichage vidéo de cette sixième partie d'image. L'affichage d'une vidéo déjà montée est ainsi transparent pour le lecteur.

Alternativement, on peut prévoir que la pluralité de parties d'image comprenne seulement des parties d'image correspondant chacune à une seule source. Auquel cas, en cas de en cas de clic sur la sixième icône, le lecteur lit les données de réalisation correspondant à la vidéo montée et effectue un affichage des autres parties d'image en appliquant ces données de réalisation. On évite ainsi de transporter deux fois les mêmes données d'image et le serveur peut ainsi générer toujours la même séquence d'images, avec simplement les parties d'image correspondant aux différentes sources.

Avantageusement et de façon non limitative, le procédé peut comprendre :
- stocker en mémoire les valeurs du paramètre de choix reçues de l'interface utilisateur, de façon à associer à chaque valeur du paramètre de choix une valeur de date de saisie. Avantageusement, le procédé peut comprendre en outre :
- transmettre vers un serveur les valeurs de paramètre de choix stockées et les valeurs de date de saisie associées, par exemple à des fins statistiques ou autre.

Ainsi, l'utilisateur peut participer lui aussi à la réalisation d'une vidéo collective.

La navigation peut être effectuée sur du direct, par exemple du direct télévisé, ou du différé.

Avantageusement et de façon non limitative, le procédé peut comprendre en outre une étape de réception d'au moins une séquence d'images additionnelle.

Avantageusement et de façon non limitative, le procédé peut comprendre une étape d'affichage d'au moins une partie d'au moins une image de cette séquence additionnelle.

Avantageusement et de façon non limitative, le procédé peut comprendre une étape de capture d'au moins une partie d'image issue d'une image de ladite au moins une séquence additionnelle, et une étape de commande d'affichage image d'une image issue de ladite au moins une partie d'image capturée, par exemple une image obtenue par réduction de l'image capturée ou bien l'image capturée elle-même. Les étapes de capture et de commande d'affichage peuvent être réitérées pour d'autres images de cette au moins une séquence additionnelle. Ainsi, on peut utiliser à nouveau les fonctionnalités de traçage et d'affichage image pour donner l'illusion d'un affichage vidéo pour cette ou ces séquences additionnelles.

La séquence additionnelle peut avoir été lue dans une mémoire du terminal utilisateur, captée par une webcaméra, reçue d'un réseau de télécommunication, générée par montage utilisateur, et/ou autre. Il peut par exemple s'agir d'une séquence vidéo créée par l'utilisateur.

L'affichage image de données issues de cette séquence additionnelle peut par exemple consister à afficher une icône montrant une image courante miniature de cette séquence additionnelle, la réitération de cet affichage permettant de donner l'illusion du mouvement.

Lorsque le lecteur génère la partie d'image supplémentaire en effectuant des captures des parties d'image de la pluralité de parties d'images de l'image courante de la séquence reçue, on peut prévoir que le lecteur capture en outre une image de cette séquence additionnelle, réduise cette image capturée et génère la partie d'image supplémentaire en y incluant les parties d'images capturées et réduites ainsi que cette image capturée et réduite issue de la séquence additionnelle.

En superposant cette icône à une fenêtre de saisie souris, on peut permettre à l'utilisateur de sélectionner cette séquence additionnelle par un simple clic, comme pour les flux issus des différentes sources et dont les données sont rassemblées sur les images de la séquence d'images reçue.

En cas de réception d'une valeur de paramètre de choix correspondant à cette séquence additionnelle, le dispositif effectue un affichage vidéo (ou image) de cette séquence additionnelle, et non plus de la séquence transportant les données images des autres flux.

On peut ainsi prévoir une fonction de type liste de lecture (« playlist » en anglais) permettant à l'utilisateur d'alimenter dynamiquement le lecteur avec plusieurs vidéos.

Dans la présente demande, l'expression « au moins un(e) » est à comprendre comme « un(e) ou plusieurs ».

On peut prévoir d'utiliser le terminal également pour la captation d'une des séquences vidéo à partir desquelles la séquence d'images est générée. Alternativement, un dispositif de captation mis en œuvre pour capter une séquence vidéo peut être distinct du dispositif de navigation.

Les sources des différents flux vidéo peuvent être prédéterminées, ou non.

Avantageusement, on peut mettre en œuvre un procédé permettant de choisir de façon souple et dynamique les différents dispositifs de captation. Ce procédé peut comprendre des étapes de communication entre des dispositifs de captation et un serveur conduisant à associer une pluralité de dispositifs de captation à une session de captation donnée.

Le procédé mis en œuvre sur un dispositif de captation peut par exemple comprendre :
- Une étape de réception de données d'identification de session de captation vidéo multi-sources, issues d'une interface utilisateur de ce dispositif de captation ; ces données peuvent par exemple comprendre un numéro de session une valeur d'une variable booléenne saisie en réponse à une invitation d'inscription à la session ou autre.
- Une étape de transmission desdites données vers un serveur, avec des données d'identification du dispositif de captation, par exemple d'un terminal et/ou de sources associées à ce terminal, en vue d'une association de ces données d'identification à cette session.

Le serveur pourra combiner les flux issus de dispositifs de captation associés à cette session en une séquence composite.

On peut avantageusement prévoir en outre une étape consistant à recevoir des données d'identification d'au moins un autre dispositif de captation, par exemple une autre source et/ou au moins un autre terminal, également inscrit à cette session lesdites données étant issues du serveur.

Par exemple, sur un dispositif de captation d'un utilisateur, par exemple un téléphone intelligent avec caméra intégrée, une tablette, ou autre, est affiché, sur requête de l'utilisateur, un message d'invitation à saisir des données d'identification de session. Le dispositif de captation reçoit des données d'identification d'une session donnée et des données d'identification d'un terminal utilisateur et/ou d'une ou plusieurs sources associées à ce terminal. Ces données sont transmises à un serveur, lequel collecte les identifiants des terminaux et/ou des sources ainsi associés à cette session et renvoie à chaque terminal inscrit la liste des autres terminaux et/ou sources inscrits.

Avantageusement, on peut prévoir de recevoir des données de signalement de terminaux géographiquement proches et/ou dont les identifiants appartiennent à liste donnée, par exemple une liste d'amis, une liste de terminaux sur lesquels une application de captation vidéo multi-source a été installée, ou autre. Pour chacun de ces terminaux, les données de signalement peuvent comprendre un identifiant de ce terminal, et éventuellement des données de localisation de ce terminal. L'utilisateur peut ainsi visualiser les emplacements des autres sources potentielles, éventuellement inviter les utilisateurs des terminaux judicieusement placés à participer à la captation d'une scène donnée, etc.

Ce procédé peut ainsi permettre d'obtenir une pluralité de sources relativement facilement, et probablement plus rapidement que si une pluralité de personnes devaient se rencontrer et convenir ensemble de filmer une scène.

Les flux vidéo issus des différentes sources d'une session données sont transmises à un serveur, lequel assure la synchronisation de ces sources, puis l'élaboration d'une séquence composite, chaque image de cette séquence comprenant plusieurs parties d'images, chaque partie d'image étant obtenue à partir d'une source correspondante parmi les sources de cette session.

Côté serveur, un dispositif d'émission vidéo peut ainsi comprendre des moyens de traitement, du type processeur ou autre, intégrés ou non avec les moyens de traitement générant le flux composite, et agencés pour recevoir des données d'identification de session et des données d'identification d'une pluralité de dispositifs de captation, et associer lesdites données d'identification de dispositifs de captation à ladite session.

Le serveur pourra combiner les flux issus de dispositifs de captation associés à cette cession en une séquence composite.

Cette séquence composite peut ensuite être transmise à différents terminaux, incluant ou non les terminaux utilisés pour les différentes captations, à des fins de navigation multi-sources. Les utilisateurs de ces terminaux peuvent donc recevoir un support multi-sources de forme relativement élaborée, et ce relativement rapidement, car de fait ce support vidéo peut être obtenu relativement facilement, avec relativement peu d'interventions humaines. Par exemple, les personnes inscrites à la session se contentent de filmer une scène : les différents flux sont automatiquement envoyés vers un serveur, lequel génère une séquence composite et propose cette séquence à un ensemble de dispositifs de navigation. Ce procédé peut ainsi permettre une communication plus rapide et aisée que dans l'art antérieur, dans lequel proposer une vidéo relativement élaborée implique un général un montage voire d'autres traitements de type étalonnage, incrustation, etc.

On peut prévoir que le nombre de dispositifs de navigation soit égal au nombre de parties d'images de la séquence composite, ou supérieur à ce nombre de parties d'images. Par exemple, on peut choisir certains des dispositifs de captation inscrits à une session afin que la séquence composite ne soit préparée qu'à partir des flux vidéo issus des dispositifs de captation choisis. Ce choix peut être effectué par le serveur, au hasard ou non, par exemple en fonction des données de localisation des dispositifs de captation inscrits, ou bien encore par un humain. Cette personne pourra par exemple décider de remplacer tel flux par tel autre flux pour élaborer la séquence composite.

La séquence composite peut être transmise à chacun des terminaux inscrits à la session de sorte que chaque utilisateur inscrit peut visionner à la fois sa propre séquence vidéo et celles des autres utilisateurs inscrits. Cette transmission et cet affichage peuvent avantageusement être effectués pendant la captation ou rapidement après la captation, par exemple une demi-heure après. Les données de réalisation de chacun des utilisateurs peuvent être collectées et une vidéo collaborative peut ainsi être élaborée, éventuellement relativement rapidement. Ainsi, c'est à la fois la captation et le montage qui peuvent être collaboratifs.

Le procédé peut ainsi comprendre une étape consistant à transmettre un flux vidéo capté vers un serveur, en vue de l'élaboration de la séquence d'images. Le terminal de navigation peut ainsi également servir en tant que source vidéo, ou en tant que terminal en communication avec une (ou plusieurs) source vidéo distincte.

Il est en outre proposé un dispositif de navigation vidéo multi-sources, non couvert par les revendications, cet équipement comprenant :
- des premiers moyens de réception pour recevoir une séquence d'images, chaque image de ladite séquence comprenant une pluralité de parties d'images, les parties d'image de ladite pluralité comprenant des données d'images issues d'images synchronisées de flux vidéo respectifs, chaque flux vidéo étant issu d'une source correspondante,
- des deuxièmes moyens de réception pour recevoir une valeur de paramètre de choix issu d'une interface utilisateur, ladite valeur correspondant à l'un au moins desdits flux vidéo, et
- des moyens d'affichage de la au moins une partie d'image, parmi les parties d'image de cette pluralité, correspondant à la valeur de paramètre de choix reçue.

Ce dispositif peut ainsi permettre de mettre en œuvre le procédé décrit ci-dessus.

L'invention n'est en rien limitée par la forme de ce dispositif. Par exemple :
- Les premiers moyens de réception peuvent comprendre un connecteur RJ45, un module radiofréquences, un port s'entrée d'un processeur, des broches d'entrée, ou autre.
- Les deuxièmes moyens de réception peuvent comprendre une souris, un processeur exécutant un programme pilote souris, un port d'entrée de processeur, des broches d'entrée ou autre.
- Les moyens d'affichage peuvent comprendre un cœur de processeur, un port de sortie, un processeur exécutant un programme pilote écran, ou autre,
- Le dispositif de navigation peut comprendre ou être intégré dans des moyens numériques de traitement du signal, par exemple un processeur, par exemple un microprocesseur, un DSP (de l'anglais « Digital Signal Processor »), ou autre, ou bien encore un terminal, par exemple un ordinateur individuel, une tablette tactile, un téléphone intelligent (« smartphone » en anglais), ou autre.

Il est en outre proposé un programme d'ordinateur, stockable sur un support informatique, par exemple un disque dur, une mémoire d'un processeur, ou autre, et/ou téléchargeable via un réseau de communications, et comprenant des instructions pour exécuter le procédé décrit ci-dessus lorsqu'exécuté par un processeur.

Ce programme, comprenant par exemple un lecteur vidéo, peut être compatible avec un ou des navigateurs Internet. Ce lecteur peut par exemple supporter les formats d'image suivants : FLV, MP4, VP8 ou autre.

En particulier, on pourra prévoir une possibilité de couplage avec un outil de partage communautaire.

Ce programme peut être compatible avec le système d'exploitation d'une tablette tactile, d'un téléphone intelligent, ou autre.

Il est en outre proposé un procédé d'émission vidéo pour une navigation vidéo multi-sources, le procédé comprenant :
- recevoir une pluralité de flux vidéo, chaque flux correspondant à une source,
- générer à partir de la pluralité de flux reçue une séquence d'images, chaque image de ladite séquence comprenant une pluralité de parties d'images, les parties d'image de ladite pluralité comprenant des données d'images issues d'images synchronisées de flux vidéo respectifs, chaque flux vidéo étant issu d'une source correspondante,
- transmettre ladite séquence vers un terminal, via un réseau de télécommunications, par exemple Internet, via un réseau de télédiffusion, ou autre.

Ce procédé peut permettre la réception ultérieure d'une séquence vidéo avec plusieurs parties d'images issues de plusieurs sources respectives et synchronisées entre elles.

La séquence d'images peut être diffusée par exemple par satellite, ou autre.

On peut prévoir que les images ainsi générées comprennent en outre une partie d'image supplémentaire elle-même obtenue à partir de données d'image issues de la pluralité de flux vidéo, ou non.

Les sources peuvent être prédéterminées ou non.

Par exemple on peut prévoir une étape d'ouverture de session et une étape d'authentification d'un certain nombre de sources pour cette session.

Ainsi, plusieurs utilisateurs peuvent inscrire chacun une ou plusieurs sources à cette session ou un seul utilisateur peut inscrire plusieurs sources à cette session.

Il est en outre proposé un dispositif d'émission vidéo pour une navigation vidéo multi-sources, non couvert par les revendications, ce dispositif comprenant :
- des moyens de réception d'une pluralité de flux vidéo, chaque flux correspondant à une source,
- des moyens de traitement pour générer à partir de la pluralité de flux reçue une séquence d'images, chaque image de ladite séquence comprenant une pluralité de parties d'images, les parties d'image de ladite pluralité comprenant des données d'images issues d'images synchronisées de flux vidéo respectifs, chaque flux vidéo étant issu d'une source correspondante,
- des moyens de transmission pour transmettre ladite séquence vers un terminal.

Ce dispositif peut permettre de mettre en œuvre le procédé décrit ci-dessus. Là encore, l'invention n'est en rien limitée par la forme des différents moyens ni par celle du dispositif d'émission.

Les moyens de réception peuvent par exemple comprendre un port d'entrée, un câble, des broches (« pins » en anglais), ou autre. Les moyens de traitement peuvent comprendre un cœur de processeur, un processeur dédié, ou autre. Les moyens de transmission peuvent comprendre un port de sortie, un câble, un module radiofréquences, ou autre. Le dispositif d'émission peut comprendre ou être intégré dans des moyens numériques de traitement du signal, par exemple un processeur, par exemple un microprocesseur, un DSP, ou autre, ou bien encore un équipement du type serveur ou terminal, par exemple un ordinateur central, ou autre.

Avantageusement et de façon non limitative, les moyens de traitement permettant de générer la séquence d'images peuvent comprendre un dispositif multiplexeur distributeur vidéo, par exemple un dispositif commercialisé par la société Miranda sous le nom Kaleido^{®}. Un dispositif multiplexeur distributeur vidéo est en effet apte à générer une séquence d'images à partir de plusieurs flux de sorte que chaque image de la séquence générée soit partitionnée en une pluralité de parties d'image. Pour la plupart des parties d'images les données correspondantes sont issues d'une compression légère d'une image d'un flux associé. Un dispositif multiplexeur distributeur vidéo est même apte à générer une séquence d'images avec pour chaque image une partie bandeau reprenant sous forme de vignette ou d'icône des données d'image des flux transportés. Il est connu d'utiliser un dispositif multiplexeur distributeur vidéo à des fins d'affichage simultané de la pluralité de sources, pour une régie TV par exemple. On vient ici profiter de l'existence de ce type de dispositifs pour générer un flux vidéo du type reçu par le dispositif de navigation multi-sources.

Il est en outre proposé un programme d'ordinateur, stockable sur un support informatique, par exemple un disque dur, une mémoire d'un processeur, ou autre, et/ou téléchargeable via un réseau de communications, et comprenant des instructions pour exécuter le procédé décrit ci-dessus.

Par « séquence d'images », on entend des données correspondant à une séquence d'images. Les données d'image peuvent être des données numériques permettant après traitement par un lecteur vidéo d'afficher une image.

L'invention n'est en rien limitée par le nombre de sources : la pluralité de flux vidéo peut par exemple comprendre deux, trois, quatre, cinq, six, sept, huit flux, ou davantage. Dans le cas où la pluralité de partie d'images correspondant à cette pluralité de flux forme une partition de l'image transmise sur le réseau, on pourra avantageusement prévoir une pluralité de quatre, six ou huit parties d'images.

Avantageusement et de façon non limitative, on peut prévoir une étape de réception d'une valeur de paramètre de nombre de flux, issue d'une interface utilisateur, et une étape de transmission de cette valeur vers un serveur. Ainsi il est possible à l'utilisateur de choisir le nombre de flux. Suite à la réception de cette valeur de nombre de flux, le serveur envoie une séquence d'images avec un nombre de parties d'image correspondant à la valeur requise, et avec en outre une partie d'image additionnelle comprenant des données d'images relatives aux parties d'images de la séquence transmise.

Avantageusement et de façon non limitative, on peut prévoir une étape de réception d'une pluralité de valeurs d'identifiants de source, chacune de ces valeurs correspondant à une source vidéo, et une étape de transmission de cette pluralité de valeurs vers un serveur. Ainsi, il est possible à l'utilisateur de choisir les sources à partir desquelles il souhaite naviguer. Suite à la réception de cette pluralité de valeurs, le serveur génère une séquence d'images à partir des flux vidéo correspondant aux sources sélectionnées par l'utilisateur.

Préalablement à ce choix des sources, on pourra par exemple prévoir une étape d'affichage d'un plan de captation, montrant les positions des différentes caméras. L'utilisateur pourra cliquer sur les caméras sélectionnées.

Alternativement, on peut prévoir une seule génération de séquence d'images, avec donc un nombre de source fixé et un choix de sources imposé. On limite ainsi les traitements coté serveur.

La partie d'image supplémentaire peut par exemple avoir une forme de bandeau, de colonne, de camembert, ou autre. Notamment, la partie d'image supplémentaire peut comprendre une pluralité d'icônes dispersées aux quatre coins de l'image affichée.

L'invention sera mieux comprise en référence aux figures, lesquelles illustrent des modes de réalisation donnés à titre d'exemple.
- La figure 1 montre schématiquement un exemple de dispositif d'émission, selon un mode de réalisation de l'invention.
- La figure 2 montre un exemple d'image issu d'une séquence d'images générées, par application d'un exemple de procédé selon un mode de réalisation de l'invention.
- La figure 3 montre un exemple d'affichage écran sur un terminal utilisateur, par application d'un exemple de procédé de navigation multi-sources selon un mode de réalisation de l'invention.
- La figure 4 est un organigramme illustrant un exemple de procédé de navigation multi-sources, selon un mode de réalisation de l'invention.

Des références identiques peuvent être utilisées pour désigner des objets identiques ou similaires d'une figure à l'autre. Les caractéristiques de serveur, les caractéristiques relatives à la génération de la séquence d'images et les caractéristiques relatives au dispositif d'émission ainsi qu'au procédé d'émission sont décrites seulement à titre illustratif.

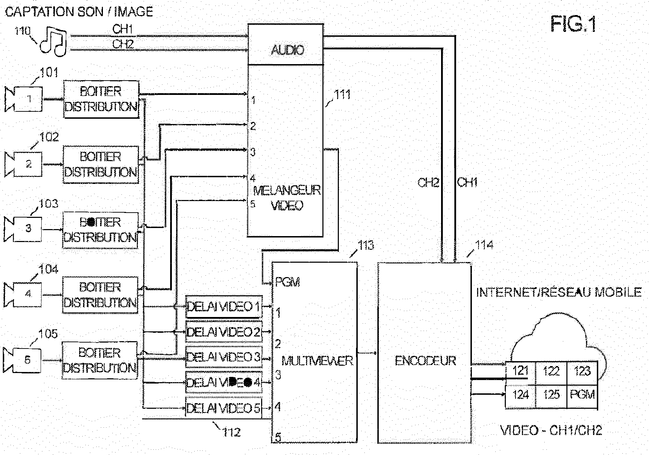

En référence à la figure 1, cinq sources vidéo, ici cinq caméras 101, 102, 103, 104, 105, permettent de capter cinq flux vidéo. Un microphone 110 permet d'enregistrer une piste sonore.

Ces cinq caméras peuvent par exemple être placées autour d'une scène pour une captation d'un concert, dans un stade pour obtenir des images d'un évènement sportif, ou autre. On pourra par exemple prévoir de capter des images d'un défilé de mode, d'une automobile (à des fins publicitaires par exemple). Parmi les autres exemples d'applications, on pourra citer les fictions, par exemple web-fictions, l'apprentissage en ligne (« e-learning » en anglais), ou autre.

Après resynchronisation, ces cinq flux ainsi que les données sonores sont envoyés vers un mélangeur vidéo 111. Ce dispositif 111 comporte une interface utilisateur et est agencé pour permettre un montage par un technicien.

Les cinq flux resynchronisés sont en outre envoyés sur des lignes à retard 112 pour combler le retard induit par le montage au sein du dispositif mélangeur 111. Les flux issus des lignes à retard 112 et le flux (correspondant à une vidéo pré-réalisée) issu du dispositif mélangeur 111 sont donc synchronisés.

Ces six flux sont envoyés à un dispositif multiplexeur distributeur vidéo Multiviewer ou 113, lequel génère à partir de ces six flux une séquence d'images envoyées vers un dispositif de diffusion de flux (« streaming » en anglais) 114.

Le dispositif 113 est capable de générer une mosaïque d'images avec plusieurs emplacements et dispositions. Eventuellement, un même flux peut être repris plus d'une fois, et avec des tailles différentes.

Après encodage, cette séquence d'images peut ensuite être transmise sur un serveur d'hébergement, en vue d'une distribution par exemple via un réseau CDN (de l'anglais « Content Delivery Network »).

Dans l'exemple de la figure 1, chaque image de la séquence d'image est partitionnée en six parties d'images 121, 122, 123, 124, 125 et PGM correspondant respectivement aux flux issus des caméras 101, 102, 102, 104, 105 et au flux issu du dispositif mélangeur 111.

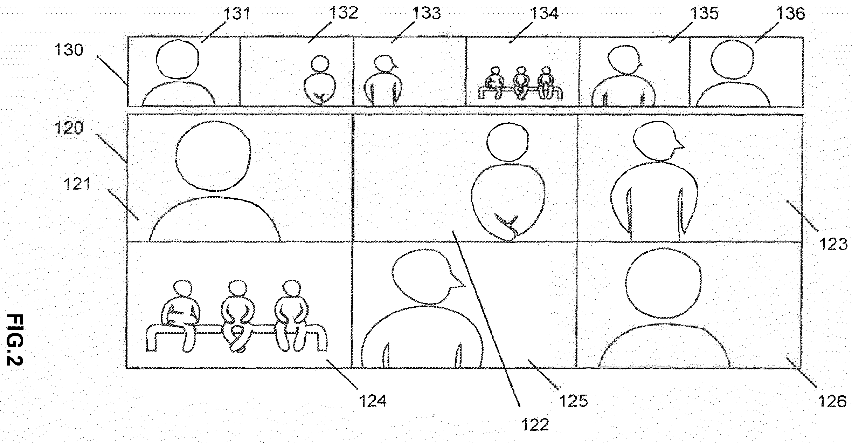

La figure 2 montre un autre exemple d'image générée par un dispositif d'émission selon un mode de réalisation de l'invention.

Dans cet exemple, une image de la séquence vidéo comprend une zone 120 partitionnée en six parties d'image 121, 122, 123, 124, 125, 126 et une partie d'image additionnelle ou zone de vignettes 130.

Chacune des parties d'image 121, 122, 123, 124, 125 comprend des données d'images issues d'images synchronisées de flux vidéo issus respectivement de cinq caméras.

Par exemple, la caméra correspondant à la partie 121 permet d'obtenir un gros plan de face d'un premier protagoniste, la caméra correspondant à la partie d'image 122 permet d'obtenir un plan américain d'un deuxième protagoniste, la caméra correspondant à la partie 123 permet d'obtenir un plan américain d'un troisième protagoniste, la caméra correspondant à la partie d'image 124 permet d'obtenir une vue éloignée de trois protagonistes dont le premier, et la caméra correspondant à la partie 125 permet d'obtenir un gros plan du protagoniste correspondant à la partie d'image 123.

La partie d'image 126 comprend des données d'image issues d'un flux obtenu par montage des cinq autres flux. Les données d'images de la partie d'image 126 sont synchronisées avec celles des autres parties d'image 121, 122, 123, 124, 125. Dit autrement, les données de cette partie d'image 126 peuvent être identiques à celle d'une des autres parties d'image, ici la partie 121.

Pour chacun des flux issus de ces caméras et pour le flux issu du montage, chaque image de ce flux est compressée d'un facteur six ou sept, puis assemblée avec les autres images compressées de façon à former la zone 120.

La zone 130 comprend 6 sous-zones, ou vignettes, 131, 132, 133, 134, 135, 136. Le contenu de chaque vignette est issu d'une ou plusieurs compressions de l'image correspondante du flux associé à cette vignette. Dit autrement, chaque vignette 131, 132, 133, 134, 135, 136 est associée à une partie d'image respective 121, 122, 123, 124, 125, 126, et les données image d'une vignette correspondent à une miniature de l'image de la partie d'image correspondante.

Dans ce mode de réalisation, la zone 130 est générée au sein d'un serveur distant, et chaque image transmise sur le réseau comprend cette zone de bandeau 130.

Dans cet exemple, chaque partie d'image 121, 122, 123, 124, 125, 126 a une taille de 640x360 pixels et chaque vignette 131, 132, 133, 134, 135, 136 a une taille de 320x180 pixels.

Pour un nombre de flux transportés inférieur à six, les dimensions des parties d'images, et/ou des vignettes peuvent augmenter. Par exemple, les dimensions des parties d'image peuvent rester fixes, tandis que pour cinq flux, les vignettes occuperont 384x216 pixels, de façon à ce que la zone 130 forme toujours un bandeau.

Dan un mode de réalisation alternatif, les images de la séquence reçues sont dénuées de partie de bandeau et comprennent simplement une pluralité de parties d'image, par exemple six parties d'image. On optimise ainsi l'occupation de la bande passante de façon à transmettre de l'information utile.

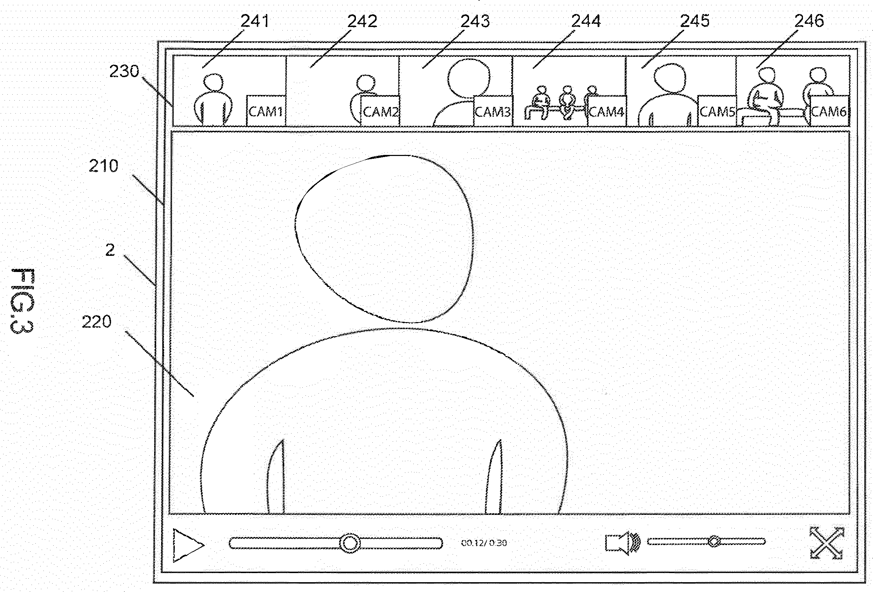

En référence à la figure 3, une fenêtre 200 d'un lecteur vidéo, par exemple un lecteur Flash^{®} comprend une portion d'affichage 210 avec une portion d'affichage principal 220 et une portion de bandeau 230, sur laquelle sont visualisables les vignettes ou icônes 241, 242, 243, 244, 245, 246 de la zone 130.

A chacune de ces vignettes est superposé un calque, de sorte que si l'utilisateur clique sur une vignette, par exemple la vignette 241, il voit s'afficher dans la portion d'affichage principal 220 les données d'image de la partie d'image 121 correspondant à cette vignette 241. Pour changer de source, il suffit à l'utilisateur de cliquer sur une autre vignette 242, 243, 244, 245, 246.

La vignette sélectionnée est différenciée par un changement graphique. L'état sélectionné/non-sélectionné est représenté graphiquement via un calque.

Dans cet exemple, chaque vignette 241, 242, 243, 244, 245, 246 correspond à une caméra. Est superposée sur chaque vignette un affichage d'un identifiant de caméra, avec par exemple l'indication « CAM1 », « CAM2 », etc.

Le lecteur comporte en outre un bouton de lecture/pause, une barre de chargement, etc.

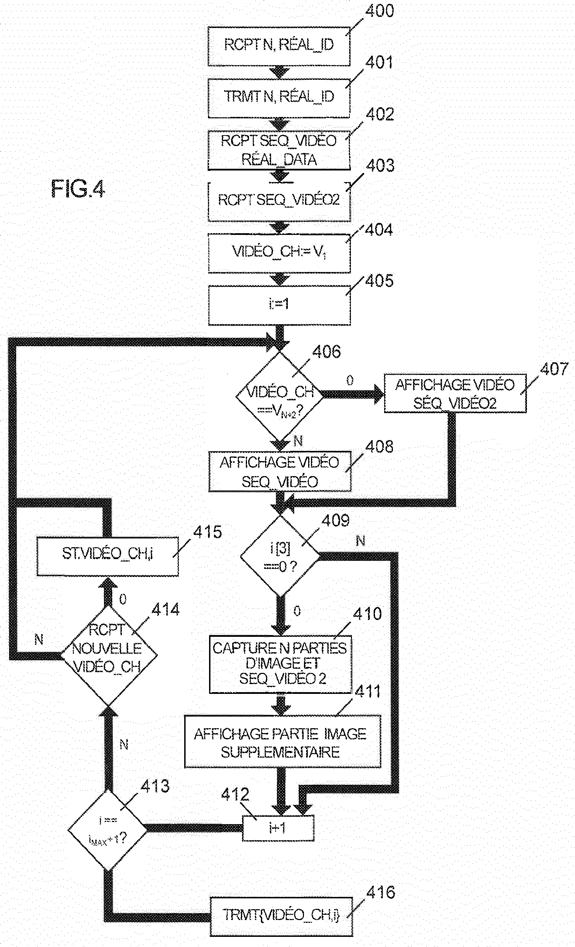

En référence à la figure 4, un dispositif de navigation, non couvert par les revendications, par exemple un terminal exécutant un logiciel lecteur adapté peut recevoir au cours d'une étape 400 d'une interface utilisateur, par exemple une souris ou un clavier, une valeur de paramètre de nombre de flux N, ainsi qu'une valeur d'un identifiant d'un réalisateur real_ID. Cette étape 400 peut faire suite à une étape non représentée d'affichage d'une proposition quant au nombre de flux et d'une proposition quant au choix d'un réalisateur.

L'identifiant de réalisateur real_ID est susceptible de prendre une valeur correspondant à une réalisation collective.

Ces valeurs N, real_ID sont transmises vers un serveur via un réseau de type Internet, au cours d'une étape 401.

En fonction des valeurs reçues, un dispositif d'émission génère une séquence d'images seq_vidéo, avec N parties d'images et transmet des données de réalisation real_data correspondant à cette valeur d'identifiant real_ID. Ces données de réalisation comprennent un ensemble de valeur de choix de flux et de valeurs de date associées.

Cette séquence vidéo seq_video et ces données de réalisation real_data sont reçues au cours d'une étape 402. Ces données de réalisation peuvent avoir la forme d'une liste de décision de montage ou EDL (pour « Edit Decision List » en anglais).

Au cours d'une étape 403, on reçoit une autre séquence vidéo seq_vidéo2, par exemple une séquence captée par une webcaméra de l'utilisateur.

Puis, après des étapes d'initialisation 404, 405, est exécutée une boucle, indicée i, afin de parcourir toutes les images reçues de la séquence vidéo seq_vidéo.

Bien que les étapes 402, 403 soient représentées avant la boucle indicée i, on comprendra que la réception des images des séquences seq_video, seq_video2 peut se poursuivre pendant l'exécution de la boucle : par exemple, pour i courant donné, on peut par ailleurs recevoir la (i+3)ème image de chacune des séquences seq_video, seq_video2 pendant l'exécution de la boucle sur la ième image reçue.

Est tout d'abord effectué un test 406 quant à la valeur d'un paramètre de choix video_ch.

S'il s'avère que la vidéo choisie correspond à la séquence vidéo additionnelle seq_video2, le lecteur effectue un affichage vidéo de la ième image de cette séquence additionnelle, au cours d'une étape 407.

Si au contraire il s'avère que la vidéo choisie correspond à l'une des N sources ou à la vidéo déjà montée par le réalisateur, alors le lecteur effectue un affichage vidéo de la partie d'image de la ième image de la séquence seq_vidéo correspondant à cette source ou à la valeur de choix de flux des données de réalisation pour cette valeur d'indice i. Ceci est effectué au cours d'une étape 408, en ayant recours à des fonctions d'affichage vidéo, d'agrandissement et de glissement/repositionnement.

Puis un test 409 est mis en place afin que les étapes 410 et 411 ne soient effectuées que pour une image sur trois.

Ainsi, si ce test 409 est positif, un traçage vidéo est effectué au cours de l'étape 410, de façon à acquérir des données d'image à partir des N parties d'image de l'image courante de la séquence seq_vidéo et de l'image courante de la séquence additionnelle seq_video2. Puis ces données capturées font l'objet d'un traitement (non représenté), au cours duquel chaque partie d'image est réduite et disposée sur un bandeau, un camembert, ou autre, de façon à générer la partie d'image supplémentaire. Outre N vignettes correspondant chacune à une des parties d'image de la ième image reçue, la partie d'image supplémentaire comprend :
- une (N+1)ème vignette reproduisant l'une de ces N autres vignettes, ce choix étant fonction de la valeur de choix de flux pour cette ième image. La (N+1)ième vignette représente pour l'utilisateur la vidéo déjà montée par le réalisateur identifié par l'identifiant real_ID.
- une (N+2)ème vignette issue par réduction de l'image courante de la séquence additionnelle seq_vidéo2.

Cette partie d'image supplémentaire ainsi générée, comprenant donc N+2 vignettes, fait l'objet d'un affichage image au cours d'une étape 411. Ce sont ces affichages image, ici effectuées pour une image sur trois qui permettent de donner aux vignettes l'illusion d'un mouvement.

L'utilisateur a ainsi la perception de visionner N+2 vignettes animées.

La boucle indicée i comporte en outre des étapes classiques de test de sortie 413 et d'incrémentation 412.

Tant que le visionnage se poursuit, si le test 414 montre qu'une nouvelle valeur de paramètre de choix vidéo_ch a été reçue, alors cette valeur vidéo_ch est stockée en mémoire avec une valeur de date de saisie, ici la valeur courante de l'indice i, au cours d'une étape 415. Puis l'exécution des étapes de la boucle conduit à un visionnage de la nouvelle vidéo choisie.

En cas de sortie de boucle, les différentes valeurs du paramètre de choix vidéo_ch mémorisées sont transmises au cours d'une étape 416 vers un serveur, avec les indices correspondant. De telles données de réalisation pourront permettre à un tiers utilisateur d'avoir la sensation que son terminal rejoue la séquence montée par l'utilisateur courant.

Au cours du visionnage, la piste son de la séquence seq_vidéo est également jouée.

## Revendications

1. Procédé de navigation vidéo multi-sources_mise en œuvre par un dispositif de navigation vidéo multi-sources, comprenant :
recevoir (402) une séquence d'images, chaque image de ladite séquence comprenant une pluralité de parties d'images (121, 122, 123, 124, 125, 126), les parties d'image de ladite pluralité comprenant des données d'images issues d'images synchronisées de flux vidéo respectifs, chaque flux vidéo étant issu d'une source correspondante,
recevoir (414) une valeur de paramètre de choix (vidéo_ch) issue d'une interface utilisateur, ladite valeur correspondant à l'un au moins desdits flux vidéo, et
commander (408) l'affichage de la au moins une partie d'image, parmi les parties d'image de cette pluralité, correspondant à la valeur du paramètre de choix reçue,
dans lequel
le procédé comprend en outre, pour au moins une image reçue, commander (411) l'affichage d'une partie d'image supplémentaire (130) comprenant une pluralité d'ensembles de données d'images, dits icônes ou vignettes (131, 132, 133, 134, 135, 136), chaque ensemble de données d'image étant issu d'un respectif desdits flux vidéo, et
l'affichage de la partie d'image supplémentaire (130) comprend, pour au moins une image courante de la séquence d'images reçue:
(a) une étape de capture (410) d'au moins une partie d'image de ladite image courante,
(b) une étape de commande (411) d'affichage image d'une image issue de ladite au moins une partie d'image capturée,
et dans lequel les étapes (a) et (b) sont réitérées pour au moins une autre image de la séquence reçue, de sorte que cette réitération donne l'illusion d'un affichage vidéo,
**caractérisé en ce qu'**au cours de l'étape (a), on capture (410) au moins deux parties d'image parmi la pluralité de parties d'image (121, 122, 123, 124, 125, 126) de l'image courante,
le procédé comprenant en outre
générer la partie d'image supplémentaire à partir desdites au moins deux parties d'image capturées à l'étape (a),
commander (411) au cours de l'étape (b) un affichage image de ladite partie d'image supplémentaire.

2. Procédé selon la revendication 1, dans lequel on commande l'affichage de la au moins une partie d'image correspondant à la valeur de paramètre de choix reçue et de la partie d'image supplémentaire au moyen d'un seul lecteur vidéo.

3. Procédé selon l'une quelconque des revendications 1 à 24, comprenant en outre :
recevoir d'un serveur au moins une valeur de paramètre de choix et au moins une valeur de date correspondant à ladite au moins une valeur de paramètre de choix, et
élaborer en fonction desdites valeurs de paramètre de choix et de date des données de commande destinées à l'interface utilisateur afin de signaler à l'utilisateur au moins un flux vidéo correspondant audites valeurs reçues.

4. Procédé selon la revendication 3, dans lequel le flux vidéo correspondant aux valeurs reçues du serveur est signalé au moyen d'un élément de signalisation visuel.

5. Procédé selon la revendication 3 ou 4, dans lequel la valeur de paramètre de choix reçue du serveur est obtenue à partir d'une pluralité de valeurs de paramètres de choix saisies par un ensemble d'utilisateurs et issues d'une pluralité de terminaux respectifs et correspondant à la valeur de date.

6. Procédé selon l'une des revendications 1 à 5, comprenant en outre :
recevoir (403) au moins une séquence additionnelle (vidéo_seq2),
capturer (410) au moins une partie d'image issue d'une image de ladite au moins une séquence additionnelle,
commander (411) un affichage image d'une image issue de ladite au moins une partie d'image capturée, et réitérer les étapes de capture et de commande d'affichage image pour au moins une autre image de la séquence additionnelle reçue, de sorte que cette réitération donne l'illusion d'un affichage vidéo.

7. Produit programme d'ordinateur comprenant des instructions pour effectuer les étapes du procédé selon l'une quelconque des revendications 1 à 6 lorsqu'exécuté par un processeur.

## Patentansprüche

1. Navigationsverfahren mit mehreren Videoquellen, das von einer Navigationsvorrichtung mit mehreren Videoquellen durchgeführt wird, umfassend:
Empfangen (402) einer Bildsequenz, wobei jedes Bild der Sequenz eine Vielzahl von Bildteilen (121, 122, 123, 124, 125, 126) umfasst, wobei die Bildteile der Vielzahl Bilddaten, die aus synchronisierten Bildern jeweiliger Videoströme stammen, umfassen, wobei jeder Videostrom aus einer entsprechenden Quelle stammt,
Empfangen (414) eines ausgewählten Parameterwerts (video_ch), der aus einer Benutzerschnittstelle stammt, wobei der Wert mindestens einem der Videoströme entspricht, und
Steuern (408) der Anzeige des mindestens einen Bildteils von den Bildteilen dieser Vielzahl, der dem empfangenen ausgewählten Parameterwert entspricht,
wobei
das Verfahren ferner umfasst, für mindestens ein empfangenes Bild, Steuern (411) der Anzeige eines zusätzlichen Bildteils (130), umfassend eine Vielzahl von Bilddateneinheiten, bezeichnet als Icons oder Vignetten (131, 132, 133, 134, 135, 136), wobei jede Bilddateneinheit aus einem jeweiligen der Videoströme stammt, und
die Anzeige des zusätzlichen Bildteils (130) für mindestens ein laufendes Bild der empfangenen Bildsequenz umfasst:
(a) einen Schritt des Erfassens (410) von mindestens einem Bildteil des laufenden Bildes,
(b) einen Schritt des Steuerns (411) der Bildanzeige eines Bildes, das aus dem mindestens einen erfassten Bildteil stammt,
und wobei die Schritte (a) und (b) für mindestens ein anderes Bild der empfangenen Sequenz derart wiederholt werden, dass diese Wiederholung die Vorstellung einer Videoanzeige vermittelt,
**dadurch gekennzeichnet, dass** während des Schritts (a) mindestens zwei Bildteile von der Vielzahl von Bildteilen (121, 122, 123, 124, 125, 126) des laufenden Bildes erfasst (410) werden,
wobei das Verfahren ferner umfasst
Generieren des zusätzlichen Bildteils aus den mindestens zwei in Schritt (a) erfassten Bildteilen,
Steuern (411) während des Schritts (b) einer Bildanzeige des zusätzlichen Bildteils.

2. Verfahren nach Anspruch 1, wobei die Anzeige des mindestens einen Bildteils, der dem empfangenen ausgewählten Parameterwert entspricht, und des zusätzlichen Bildteils mittels eines einzigen Videoplayers gesteuert wird.

3. Verfahren nach einem der Ansprüche 1 bis 2, umfassend ferner:
Empfangen, von einem Server, mindestens eines ausgewählten Parameterwerts und mindestens eines Zeitwerts, der dem mindestens einen ausgewählten Parameterwert entspricht, und
Ermitteln, in Abhängigkeit von den ausgewählten Parameter- und Zeitwerten, von Steuerdaten, die für die Benutzerschnittstelle bestimmt sind, um dem Benutzer mindestens einen Videostrom anzuzeigen, der den empfangenen Werten entspricht.

4. Verfahren nach Anspruch 3, wobei der Videostrom, der den von dem Server empfangenen Werten entspricht, mittels eines visuellen Anzeigemittels angezeigt wird.

5. Verfahren nach Anspruch 3 oder 4, wobei der vom Server empfangene ausgewählte Parameterwert aus einer Vielzahl ausgewählter Parameterwerte erhalten wird, die von einer Benutzergruppe eingegeben werden und aus einer Vielzahl jeweiliger Endgeräte stammen und dem Zeitwert entsprechen.

6. Verfahren nach einem der Ansprüche 1 bis 5, umfassend ferner:
Empfangen (403) mindestens einer zusätzlichen Sequenz (video_seq2),
Erfassen (410) mindestens eines Bildteils, das aus einem Bild der mindestens einen zusätzlichen Sequenz stammt,
Steuern (411) einer Bildanzeige eines Bildes, das aus dem mindestens einen erfassten Bildteil stammt, und
Wiederholen der Schritte des Erfassens und des Steuerns einer Bildanzeige für mindestens ein anderes Bild der empfangenen zusätzlichen Sequenz, so dass diese Wiederholung die Vorstellung einer Videoanzeige vermittelt.

7. Rechnerprogrammprodukt, umfassend Befehle zur Durchführung der Schritte des Verfahrens nach einem der Ansprüche 1 bis 6, wenn von einem Prozessor ausgeführt.

## Claims

1. A method for navigating multisource video implemented by a multi-source video navigation device, comprising:
receiving (402) a sequence of images, each image of said sequence comprising a plurality of image portions (121, 122, 123, 124, 125, 126), the image portions of said plurality comprising image data originating from synchronized images of respective video streams, each video stream originating from a corresponding source,
receiving (414) a choice parameter value (video_ch) originating from a user interface, said value corresponding to one at least of said video streams, and
commanding (408) the display of the at least one image portion, from the image portions of said plurality, corresponding to the received value of the choice parameter,
wherein
the method further comprises, for at least one received image, commanding (411) the display of an additional image portion (130) comprising a plurality of image data sets, said icons or thumbnails (131, 132, 133, 134, 135, 136), each image data set originating from a respective of said video streams,
the display of the additional image portion (130) comprises, for at least one current image of the received sequence of images:
(a) a step of capturing (410) at least one image portion of said current image,
(b) a step of commanding (411) image display of an image originating from said at least one captured image portion,
and wherein steps (a) and (b) are reiterated for at least one other image of the received sequence, such that this reiteration creates the illusion of a video display,
**characterised in that** at step (a), at least two image portions are captured (410) from the plurality of image portions (121, 122, 123, 124, 125, 126) of the current image,
the method further comprising
generating the additional image portion from said at least two image portions captured in step (a),
commanding (411) at step (b) an image display of said additional image portion.

2. The method as claimed in claim 1, wherein display of the at least one image portion corresponding to the received choice parameter value and of the additional image portion is commanded by means of a single media player.

3. The method as claimed in any one of claims 1 to 2, further comprising:
receiving from a server at least one choice parameter value and at least one date value corresponding to said at least one choice parameter value, and
generating depending on said date and choice parameter values command data intended for the user interface, in order to signal to the user at least one video stream corresponding to said received values.

4. The method as claimed in claim 3, wherein the video stream corresponding to the values received from the server is signaled by means of a visual signaling element.

5. The method as claimed in claim 3 or 4, wherein the choice parameter value received from the server is obtained from a plurality of choice parameter values originating from a plurality of respective terminals and corresponding to the date value.

6. The method as claimed in one of claims 1 to 5, furthermore comprising:
receiving (403) at least one additional sequence (video_seq2),
capturing (410) at least one image portion originating from one image of said at least one additional sequence,
commanding (411) an image display of an image originating from said at least one captured image portion, and
reiterating the capture and image display command steps for at least one other image of the received additional sequence, such that this reiteration creates the illusion of a video display.

7. A computer program product comprising instructions for performing the steps of the method according to any one of claims 1 to 6 when it is executed by a processor.
